# EUROPEAN PATENT APPLICATION

(11) **EP 1 585 357 A1**
(43) Date of publication of application: **12.10.2005**
(21) Application number: 05006972.3
(22) Date of filing: 31.03.2005
(51) Int. Cl.: H04Q 7/38

(54) **Optimizing the resources of the telecommunications network**

(30) Priority: 07.04.2004 FI 20040509
(71) Applicant: TeliaSonera Finland Oyj, 00051 Sonera (FI)
(72) Inventor: Laakso, Ville, 00530 Helsinki (FI)

(57) **Abstract**

The invention relates to the management of handovers by controlling the network parameters so that the network capacity can be optimized. An UE measures signal strengths of cells in the area and transmits a measurement report to the network. An active set comprising information about the cells relating to the handover is maintained in the network and it is updated by comparing the measured signal strengths of the cells in the area to window set values comprising information about predetermined conditions to initiate the active set updating. According to the invention a value describing radio conditions in the area is determined from the measurement report values received from the UE. The determined value is compared to a threshold value set in the network and the window set values are changed in response to said comparison. The invention relates also to a system and a network element performing the method.

## Description

### FIELD OF THE INVENTION

The present invention relates to a management of a communication network. Especially, the invention relates to the management of handovers by controlling the network parameters so that the network capacity can be optimized.

### BACKGROUND OF THE INVENTION

In the 3^{rd} generation (3G) mobile communication systems the mobility management is a very important issue. The aim of the management is to optimize the network resources so that the network works property and the user of the terminal receives the services he/she wants in a proper manner.

One important issue in CDMA (Code Division Multiple Access) mobile networks, especially in cellular networks, is the management of handovers. The handover is commonly known as an action of switching from one radio channel to another, during a connection, such as an on-going call, Switching from one radio channel to another is performed typically when a mobile station moves from the area of one cell to another. In the 3G mobile communications system, different types of handovers may be performed, such as soft handover, softer handover, inter-frequency handover, intra-frequency handover and inter-system handover,

A soft handover is a procedure in which a UE maintains its connection with the UTRAN via two or more cells (Node B:s) simultaneously. A soft handover is a CDMA specific procedure, made possible by the fact that all base stations use the same frequency. This makes it possible that the UE can be connected to several of them at the same time, The base stations to which a UE is connected at the same time are said to belong to an active set of the UE. Soft handovers are managed with user equipment UE measurement reports and active set update messages sent by the network and measurement control messages sent by the network. The network always makes the final decision on all changes to the UE's active set. The advantage of the soft handover especially in cell borders is that the UE can collect more signal energy from several sources simultaneously and maintain the connection better than with a single link to one cell. In addition, the interference level is lower since the transmission power of the base stations and the UEs can be optimized with soft handover. It should be born in mind that in the soft handover the UE can simultaneously be connected to several sectors of different Node B:s.

Another handover type is a softer handover. The softer handover is a special case of the soft handover. In the softer handover the UE is simultaneously connected to several sectors of a single Node B. In this context only the term soft handover will be used. However, the term soft handover should be considered as broadly as possible, especially so that the term comprises both the soft handover and the softer handover.

The base stations, which are involved in the soft handover, are selected with a special procedure in CDMA. In the procedure the UE measures the signal strengths of the cells in the active set and the signal strengths of the neighbouring cells. The UE compares the measurement results of primary Common Pilot Channel (CPICH) of the measured cells to system threshold values. The system threshold values are the following: addition window, drop window and replacement window. In this context the addition, drop and replacement windows form so-called window set. The addition window defines the value, when a new cell is added to an active set. The drop window defines the value, when a cell is dropped out from the active set and the replacement window defines the value, when a cell in the active set is replaced with another, The window sizes are fixed. The UE sends the measurement report to the network, if at least one of the threshold values exceeds. The measurement report is sent to a network element called RNC via the base stations (Node B:s), which controls the use and the reliability of the radio resources. The RNC also compares the measurement results to the system threshold values (i.e. to the window sizes) and does other system capacity evaluations. If the comparison shows that the active set in the UE must be updated, the RNC sends so-called Active Set update Command to the UE, Thus, the RNC makes the final decision of the active set update.

One of the problems with current solutions relating to the active set and especially to the updating of the active set is that the above-mentioned window sizes are fixed. As the window sizes are fixed on a cell or even on a Radio Network Controller (RNC) level, the same parameters apply independently of the radio conditions the UE faces. This is very ineffective from the network resources' point of view, especially in the good radio conditions. If the window set values are set too large, it causes large overhead of the soft handover, and significant losses is faced in a downlink Uu-interface capacity, a Base Station (Node B) code capacity and an lub-interface capacity. The soft handover overhead is a common metric, which is used to quantify the soft handover activity in a network. It can be considered as a measure of the additional hardware and transmission resources required for implementation of the soft handover. So, the more often the UE is in soft handover the larger is the soft handover overhead. That is why the number of soft handovers should be minimized.

A more practical example of the problems with the known solution can be shown from the UMTS. In UMTS, the UE measures a Common Pilot Channel CPICH of the active set cells and the neighboring cells. Especially, the measured values are so-called Energy of a chip compared to interference Ec/No and Received Signal Code Power RSCP (the energy level at which a reception is made). As the Ec/No = RSCP/RSSI, where the RSSI is the Received Signal Strength Indicator (the noise/interference experienced by the receiver), the Ec/No levels do not fluctuate much on good radio conditions. This is due to the fact that in good radio conditions (low pathloss) the No=RSSi is mainly generated by interference from own active set cells. Therefore in these conditions, the fading pattern of interference can be considered more or less identical to the fading pattern of received signal RSCP, as they are both generated from the same source. The white noise component is negligible in good field (high RSSI, low pathloss, high Ec/No, high RSCP),

At the edges of cells the interference is mainly generated by the white noise from surrounding environment. At this point, the interference generated from own active set cells is negligible. The level of white noise is dependent on the channel bandwidth of the system and can be considered quite static. Thus, at the cell borders, where the network conditions will remain at relatively constant level, the Energy of a chip compared to interference Ec/No starts to follow the fading patterns of Received Signal Code Power RSCP (the energy level at which a reception is made) and fluctuates very rapidly (fast fading). The rapid Ec/No fluctuation causes the UE to add and drop the cells on its active set uncontrollably and the soft handover gain is lost in the process. Fixing large addition and drop windows could solve this problem, but it would result in significant capacity losses at high Ec/No and RSCP levels and is thus a problem.

### BRIEF DESCRIPTION OF THE INVENTION

An object of the present invention is thus to provide a method, a system and a network element to overcome the above-mentioned problems. The objects of the invention are achieved by a method, a system and a network element, which are characterized by what is stated in the independent claims. Embodiments of the invention are disclosed in the dependent claims.

The solution according to the present invention is based on the inventive idea that the window sizes in the window set are adjusted dynamically depending on the radio condition measurement results done by the UE and analyzed by a Radio Network Controller (RNC). If needed, the RNC changes the window set values after the analysis and informs the UE about the new window set values.

The basic idea is that when the UE moves towards the cell borders (defined by the measurement calculations), it starts to use more appropriate window sizes to maximize the soft handover gain at the border area of cells. When the UE moves towards good radio conditions (defined again by the measurement calculations), the RNC defines the window sizes, which are better for the situation to maximize the downlink and lub interface capacity.

According to the invention a special procedure is arranged in the RNC, in which a value describing the radio conditions of the network in the area is defined from the measurement result received from the UE. The value is derived from the measurement report values received from the user equipment UE. The derived value is compared to at least one predetermined threshold values. Depending on the comparison the window set values are changed if necessary. The UE is informed about the new window set values and the new values are used in the RNC when defining the need for active set update.

According to a first embodiment of the invention the window set values, defining the predetermined conditions to initiate an active set update, are always changed, when the RSSI value, calculated from the measurement values received in the measurement report, meets the threshold value. As a result the information about the new window set values are sent to the UE. The new window set values are used in determining the cells, which cells must be updated in the active set. An active set update message is sent to the UE if needed.

According to another embodiment of the invention the network element calculates a value describing the radio conditions of the network in the area from the measurement report values received from the user equipment UE. The value is compared to a first threshold value. If the condition of the first comparison is not fulfilled, the value is compared to another threshold value, If the condition is not fulfilled, the normal handover procedure is continued. If the condition in the first or in the second comparison is fulfilled, it is checked, which window set is in use. If the appropriate window set to the situation is already in use, the normal handover procedures are continued. If the appropriate window set is not in use, the window set is changed resulting the change in the conditions for initiating the active set update procedure. As a result the information about the new window set values are sent to the UE. The new window set values are used in determining the cells, which cells must be updated in the active set. An active set update message is sent to the UE if needed.

The system according to the invention comprises at least an User Equipment UE for measuring signal strengths of cells in the area and transmitting a measurement report comprising information at least about the signal strengths of cells in the area to the network. In addition an active set comprising information about the cells relating to the handover is maintained in the system according to the invention. The active set is updated in response to a comparison of the measured signal strengths of the cells in the area to a window set values comprising information about predetermined conditions to initiate the active set updating. The system further comprises a network element for determining a value describing the radio conditions of the network in the area from the measurement report values received from the user equipment UE and for comparing said value describing the radio conditions of the network in the area with a threshold value (set in the network). In addition the network element in the system is arranged to change window set values comprising information about the predetermined conditions to initiate the active set updating in response to said comparison of said value describing the radio conditions of the network in the area with the threshold value.

The network element according to the invention is arranged to optimize a handover procedure in a telecommunications network. The network element is arranged to determine a value describing the radio conditions of the network in the area from the measurement report values received from the user equipment UE and to compare said value describing the radio conditions of the network in the area with a threshold value (set in the network). In addition, the network element is arranged to change window set values comprising information about the predetermined conditions to initiate the active set updating in response to said comparison of said value describing the radio conditions of the network in the area with the threshold value.

The advantage of the method, the system and the network element according to the invention is that the network capacity can be improved, since the soft handover overhead is, adjusted to every situation. The system adapts the soft handover overhead depending on the radio conditions and thus maximizes the system capacity on good field strength and maximizes the soft handover gain in weak field strength. There is no need to make any modifications to the present networks or user equipments, when implementing the invention.

The present invention is applicable to any network, which uses the active set concept. This is especially known in CDMA systems, such as in UMTS.

### BRIEF DESCRIPTION OF THE FIGURES

In the following the invention will be described in greater detail by means of embodiments with reference to the accompanying drawings, in which
- Figure 1: illustrates the mobile communications system according to an embodiment of the present solution;
- Figure 2: is a flow chart illustrating the method according to a first embodiment of the present solution;
- Figure 3: is a flow chart illustrating the method according to a second embodiment of the present solution;
- Figure 4: illustrates a chart describing advantages of the method according to an embodiment of the invention;
- Figure 5: illustrates a network element according to the invention.

### DETAILED DESCRIPTION OF THE INVENTION

Preferred embodiments of the invention will be described below with reference to a 3G WCDMA (Wideband Code Division Multiple Access) mobile communication system, such as the UMTS (Universal Mobile Telecommunications System). However, the invention is not restricted to these embodiments, but it may be applied to any mobile communication system in which the handover is based to a so called active set, which comprises the information about the active cells the user equipment UE is connected to. Other examples of such systems are IS-41, IS-95, CDMA 2000 or other similar mobile communication systems, such as the PCS (Personal communication system) or the DCS 1800 (Digital cellular system for 1800 MHz), and systems implementing UMTS TDD (Time Division Duplex) or UMTS FDD (Frequency Division Duplex). Specifications of mobile systems in general and of the IMT-2000 and the UMTS in particular develop rapidly. Such development may require additional changes to be made in the invention. Therefore, all the words and expressions should be interpreted as broadly as possible and they are only intended to illustrate and not to restrict the invention. What is essential for the invention is the function itself and not the network element or the device in which the function is implemented.

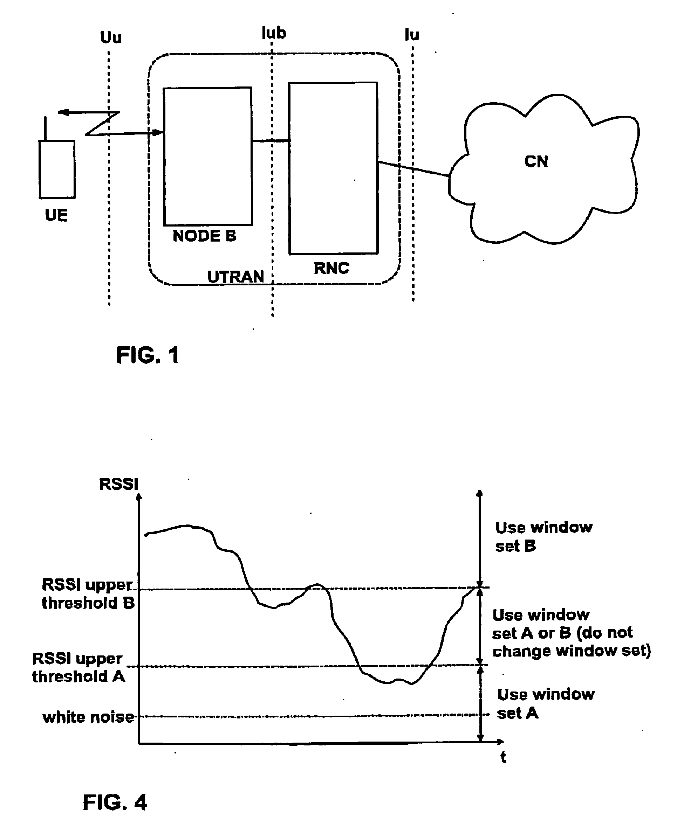

Figure 1 shows a simplified version of the mobile communications system architecture, illustrating only components that are essential to the invention, even though those skilled in the art naturally know that a general mobile communication system also comprises other functions and structures, which do not have to be described in more detail herein. The main parts of the UMTS are a Core Network CN, a UMTS radio access network UTRAN and a mobile station MS, which may also be referred to a user equipment UE. The Core Network CN is the network part in the UMTS, which takes care of the connection management, session management and mobility management among other things. The Core Network CN comprises network nodes (not shown) such as a Serving GPRS Support Node SGSN and a Mobile Switching Centre MSC. The core network CN may be connected to external networks (not shown), which may be Circuit-Switched CS networks, such as a Public Land Mobile Network PLMN, a Public Switched Telephone Network PSTN, and an Integrated Services Digital Network ISDN, or Packet-Switched PS networks, such as the Intemet and X.25. The core network is not illustrated here more accurately since it does not play an important role in the present invention. The UTRAN is a theoretical concept for the 3G radio access network comprising Radio Network Controllers RNC and base stations known as Node B. The RNC is arranged to at least control the radio resources. The interface between the RNC and Node B is called lub. The interface Uu provides interconnection between the RNC and the User Terminal via the Node B. The User Terminal may be a simplified terminal intended only for speech, or it may be a terminal for multiple services operating as a service platform and supporting the loading and execution of different service-related functions. The User Terminal comprises actual mobile equipment ME and an associated removable identification card USIM (Universal Subscriber Identity Module), which is also called a subscriber identity module. In this connection, an User Equipment UE (i.e. Mobile Station MS) generally refers to an entity of the actual terminal and the subscriber identity module.

In the CDMA systems, the user equipment UE can be connected to several base stations (i.e, Node Bs) at the same time. This is called soft handover. The list, comprising the active cells into which the UE is connected, is called an active set. The cells in the active set are selected and managed with a special procedure. For this purpose several parameters are defined, which are used in the maintenance of the active set. These parameters comprises at least addition, drop and replacement windows, which together are called a window set in this context and which define the predetermined conditions to initiate an active set update. Also other parameters are defined, but they are not important in view of the present invention and thus are not introduced here. These window values determine the threshold values, when the UE sends the measurement report to the network. The addition window defines the value, when a new cell is added to an active set, The drop window defines the value, when a cell is dropped out from the active set and the replacement window defines the value, when a cell in the active set is replaced with another, The UE measures the signal strengths of the cells in the active set as well as the neighbouring cells and compares these values to the window set values. If the comparison shows that the active set must be updated, the UE sends the measurement results to the RNC, which makes the final decision about the active set update. More specifically, in the RNC the difference between the signal-to-noise ratio of the cell in the active set having the strongest signal-to-noise ratio and the signal-to-noise ratio of the measured cells, which is not in the active set, are compared to each others and if the difference is below the addition window value, the cell is added to the active set by sending an active set update command to UE. Correspondingly, in the drop window case the signal-to-noise ratio of the other cells in the active set are compared to the signal-to-noise ratio of the cell having the strongest signal-to-noise ratio in the active set. If the difference is above the drop window value, the cell is dropped from the active set The replacement window simply defines a value, how much the signal-to-noise ratio of a neighbouring cell must be better than the signal-to-noise ratio of the weakest cell in the active set to be added to the active set by replacing the weakest cell,

The replacement window is used only if the active set is full.

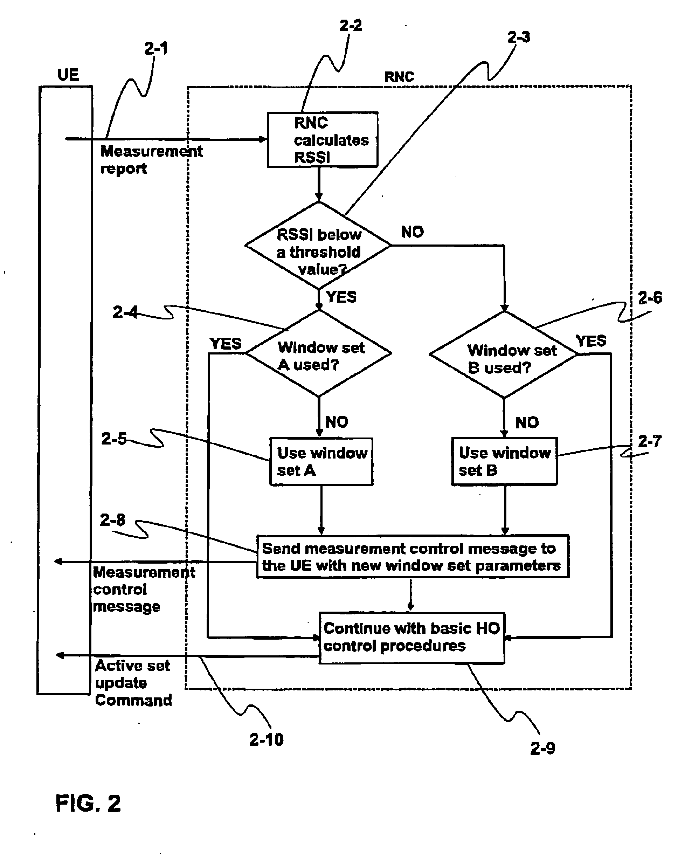

Figure 2 shows a first embodiment of the method according to the present invention. The status of the UE is that it uses a window set B, which is meant to be in use in good radio conditions and it is moving towards weaker radio conditions. The first step is that the UE sends a measurement report 2-1 to the RNC via the Node B. The measurement report comprises information about the signal strengths of the cells in the active set as well as signal strengths of the neighbouring cells to the UE in its current location, More specifically, the measurement report according to this embodiment of the invention comprises the following information: the information about the Received Signal Code Power RSCP, which refers to the energy level at which a reception is made, and the information about the Energy of a Chip compared to interference Ec/No.

In addition the UE suggests the cells, which must be added, dropped or replaced in the active set. In response to the receiving of the measurement report the RNC derives so-called Received Signal Strength Indicator RSSI value 2-2 from the values received with the measurement report by performing the calculation RSSI = RSCP / (Ec/No). The RSSI value describes the radio conditions experienced by the UE at its current location. To a man skilled in the art it is obvious that the RSSI value is independent of the number of cells being involved in the handover. The value determined in the RNC can also be any other value than RSSI. as long as it describes the radio conditions of the network experienced by the UE. When the RSSI value is derived, the RNC compares the RSSI value to a threshold value 2-3, which threshold value is set by the network operator and defined based on different criteria of the network optimization. If it is below the first threshold value, it is checked, whether the window set A is already in use 2-4. The window set A comprises information about the addition, drop and replacement windows and thus determines the predetermined conditions to initiate an active set update. If the window set A is already in use, the RNC handles the original measurement report sent by the UE according to normal soft handover procedures 2-9. The normal soft handover procedures comprise at least the determination of the cells, which must be added, dropped and replaced in the active set. After the determination an active set update command is sent to the UE if needed 2-10. If the window set A is not in use, the RNC makes a decision that the window set A should be used 2-5. The RNC sends a measurement control message to the UE with the new window set parameters 2-8. After sending the measurement control message to the UE, the RNC handles the original measurement report sent by the UE according to the normal soft handover procedures 2-9. At this point, the RNC uses the new values indicated in the window set A. The measured cell values, reported in the measurement report are compared with the new addition, drop and replacement window values (defined in the window set A) and cells, which must be added, dropped and replaced in the active set are determined. Finally, the RNC sends an active set update command to UE, if needed.

The comparison in step 2-3 may also show that the RSSI value is not below the threshold value, According to this embodiment of the invention it is checked if the window set B is use 2-6. If it is in use, the RNC continues with the basic handover control procedures 2-9. If the window set B is not in use, the RNC makes the decision that the window set B should be used 2-7 and sends a measurement control message to the UE comprising the new window set parameters 2-8. After sending the measurement control message to the UE, the RNC handles the original measurement report sent by the UE according to the normal soft handover procedures 2-9. At this point, the RNC, uses the new values indicated in the window set B. Finally, the RNC sends an active set update command to UE, if needed 2-10,

In the Figure 2, it is shown a first solution according to the invention. In the description of Figure 2 it is depicted that the value describing the network conditions experienced by the UE is the RSSI. The RSSI is appropriate because it can be calculated from the measurement information of any cell in the measurement report and the value is the same in all cells. According to the invention the value can be any measurement value, which is defined in the measurement report or derivable from it. According to one embodiment of the invention the value used in the RNC is the RSCP, which is defined individually to every cell and describes the signal strength directly. In the embodiment only the RSCP value can be transmitted in the measurement report sent by the UE, since any other values are not needed. In this situation the RNC can, for example, calculate an average of all RSCP values belonging to the cells, which are in the active set, to get a more accurate value of the network conditions. Any other method for calculating a value, which can be used in the RNC, can be used, as long as it gives information about the radio conditions in the network. In a typical measurement report sent by the UE there are reported the RSCP value of the measured cells, or the EC/No value of the measured cells or the both. In Figure 2 it is shown the UE and the RNC only, since these are the essential elements according to present invention. To a man skilled in the art it is obvious that the signals between the UE and the RNC go via other network elements also, such as Node B:s, but these are not illustrated in the Figure 2 to make the description simpler.

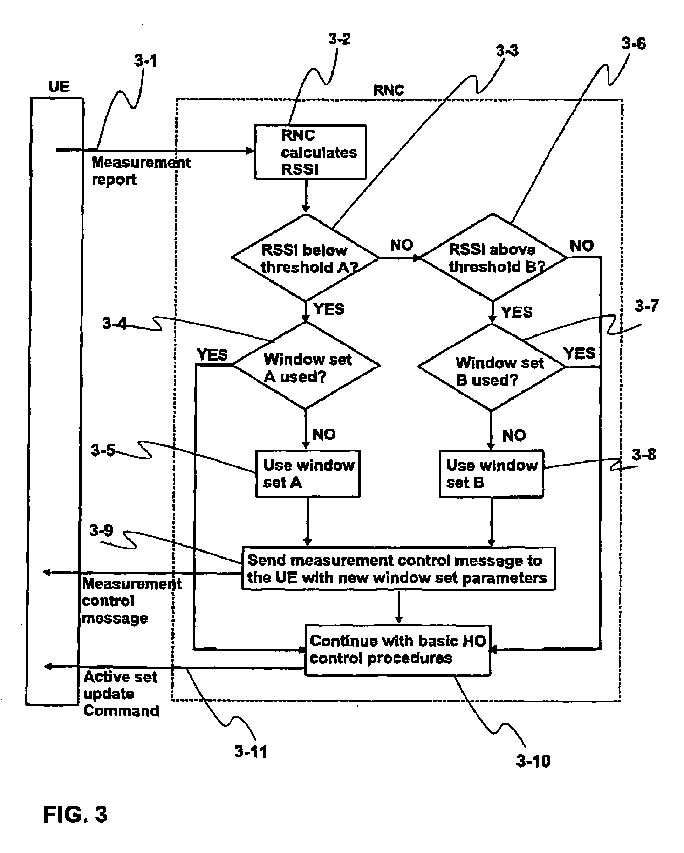

Figure 3 shows another embodiment of the method according to the present' invention. The status of the UE is that it uses a window set B, which is meant to be in use in good radio conditions. The first step is that the UE sends a measurement report 3-1 to the RNC via the Node B. The measurement report comprises information about the signal strengths of the cells in the active set as well as signal strengths of the neighbouring cells to the UE in its current location. More specifically, the measurement report according to this embodiment of the invention comprises at least the following information: the information about the Received Signal Code Power RSCP, which refers to the energy level at which a reception is made, and the information about the Energy of a Chip compared to interference Ec/No. In addition the UE suggests the cells, which must be added, dropped or replaced in the active set. In response to the receiving of the measurement report the RNC derives so-called Received Signal Strength Indicator RSSI value 3-2 from the values received with the measurement report by performing the calculation RSSI = RSCP / (Ec/No). The RSSI value describes the radio conditions experienced by the UE at its current location. To a man skilled in the art it is obvious that the RSSI value is independent of the number of cells being involved in the handover. When the RSSI value is derived, the RNC compares the RSSI value to a first threshold value A 3-3, which threshold value is set by the network operator and defined based on different criteria of the network optimisation. If it is below the first threshold value A, it is checked, whether the window set A is already in use 3-4. The window set A comprises information about the addition, drop and replacement windows, If the window set A is already in use, the RNC handles the original measurement report sent by the UE according to normal soft handover procedures 3-10. The normal soft handover procedures comprise at least the determination of the cells, which must be added, dropped and replaced in the active set. After the determination an active set update command is sent to the UE if needed 3-11. If the window set A is not in use, the RNC makes a decision that the window set A should be used 3-5. The RNC sends a measurement control message to the UE with the new window set parameters 3-19. After sending the measurement control message to the UE, the RNC handles the original measurement report sent by the UE according to the normal soft handover procedures 3-10. At this point, the RNC uses the new values indicated in the window set A. The measured cell values, reported in the measurement report are compared with the new addition, drop and replacement window values (defined in the window set A) and cells, which must be added, dropped and replaced in the active set are determined. Finally, the RNC sends an active set update command to UE, if needed.

The comparison in step 3-3 may also show that the RSSI value is not below the threshold A. In this case the RNC makes another comparison and compares the RSSI value according to this embodiment to another threshold value B 3-6. If the RSSI value is not above the threshold value B, the RNC continues with the basic handover control procedures 3-10 as described earlier and sends an active set update command to the UE if needed 3-11. If the RSSI value is above the threshold B, it is checked if the window set B is used 3-7. If it is in use, the RNC continues with the basic handover control procedures 3-10. If the window set B is not in use, the RNC makes the decision that the window set B should be used 3-8 and sends a measurement control message to the UE comprising the new window set parameters 3-9. After sending the measurement control message to the UE, the RNC handles the original measurement report sent by the UE according to the normal soft handover procedures 3-10. At this point, the RNC uses the new values indicated in the window set B. Finally, the RNC sends an active set update command to UE, if needed.

The embodiment according to Figure 3 comprises so-called hysteresis area, which is between the thresholds A and B, If the RSSI value derived from the measurement report is in the hysteresis area (i.e. between the threshold values A and B), the window set values are not changed. The advantage of the hysteresis is that the network operator can adjust the size of the hysteresis and thus control the network resources conveniently.

According to the inventive idea of the present invention it is also possible to define more threshold values and window sets. If this is done, new comparison steps must be done in the network element, such as the RNC. This requires more computing capacity in the RNC and makes the process slower. Thus, the number of comparison steps in the RNC must be adjusted so that an extra step in the comparison is in balance with the advantage received from it.

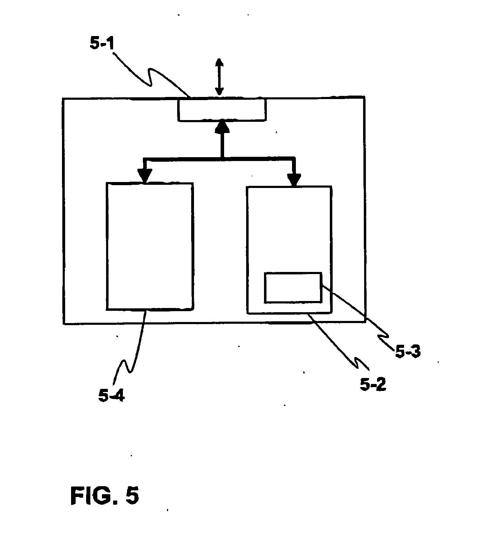

Figure 4 illustrates, how the change in the RSSI value affects the window sets, when the threshold values are crossed. The Figure 4 refers to the method according to the invention shown in Figure 3. The starting point is that the UE is using the window set B, which is the situation in the good radio conditions (RSSI is high) and the soft handover overhead is small. At some point, the RSSI value fades below the threshold B. The RNC notices that the RSSI value is between the threshold values A and B, when calculating the RSSI value using the information from the measurement report. In this situation the RNC makes the decision not to make any changes to the window set, as shown in Figure 3. When the RSSI value fades more and especially below the threshold A (threshold A < threshold B), the RNC notices it from the RSSI calculations and the comparison. As a result, the window set B is changed to window set A and the UE equipment is informed about the change, as described earlier. When the window set A is in use, the soft handover overhead is large, since the radio conditions are not good. When the RSSI value goes up again, the window set A is used until the RSSI value is higher than the threshold B and the window set B is taken into use again. The white noise component is also shown in Figure 4.

The system according to the invention is implemented so that the network can maximize the system capacity by optimizing the soft handover overhead. This is arranged so that the system comprises a network element, which is arranged to define a value describing the radio conditions in the network, such as a RSSI value, from the UE measurements. The value is compared to threshold values in the network. If the comparison shows that the value, like the RSSI, is below a first threshold value, the network element in the system checks, which window set is in use. If it is the proper one, the network element in the system continues with the basic handover procedures and sends an active set update command to the UE if needled. If the window set is not proper for the situation, the network element in the system selects a better window set for the situation and informs the UE of the new window set in the measurement control message.

An embodiment of the network element according to the invention is shown in Figure 5, which network element is arranged to perform the method steps described earlier. The network element is arranged to maximize the system capacity by optimizing the soft handover overhead. The network element comprises input/output means 5-1 for receiving the UE measurement report via the Node B. The input/output means can be any kind of connection by means of which the signals can be transmitted to/from the network element. The network element comprises means for calculating 5-2 a value from the measurement report, which gives information about the network conditions experienced by the UE. The calculated value is for example the RSSI value. The means for calculating the value can for example be a microprocessor running an appropriate software 5-3. The network element is arranged also to compare the calculated value with a predetermined threshold value and in response to the comparison to make a decision, if the window set in use is appropriate for the situation. If it is not, the network element changes the window set and is arranged to inform the UE about the change. The network element comprises memory means 5-4 for storing the threshold values and the active set values, Furthermore, the network element is arranged to carry out all the handover procedures. The network element controls the handover procedure by sending different kind of control signals to other elements in the network, such as the UE, through the input/output means 5-1. The above-mentioned functions are advantageously implemented with a microprocessor running software for the functions. The software is stored into the memory means 5-4 of the network element. The different components are arranged to communicate with each other so that the functions according to the invention can be implemented. Advantageously the network element is a Radio Network Controller RNC. According to another solution the comparison algorithm can be arranged to the Node B. To a man skilled in the art it is obvious that the functions mentioned above can also be distributed to any network elements, which comprise means to perform the functions described above.

To a man skilled in the art it is clear that the values describing radio conditions of the network in the area are the UE specific and must be determined to each UE separately. In the description it is described that the UE is moving from good radio conditions towards weaker radio conditions. The solution according to the inventions is naturally applicable in a situation, where the UE is moving from weak radio conditions towards better radio conditions.

It will be obvious to a person skilled in the art that, as the technology advances, the inventive concept can be implemented in various ways. The invention and its embodiments are not limited to the examples described above but may vary within the scope of the claims.

## Claims

1. A method for optimizing a handover procedure in a telecommunications network, the method comprising at least
- an user equipment UE for measuring signal strengths of cells in the area and transmitting a measurement report comprising information at least about the signal strengths of cells in the area to the network,
in which method an active set comprising information about the cells relating to the handover is maintained; the active set is updated in response to a comparison of the measured signal strengths of the cells in the area to window set values comprising information about predetermined conditions to initiate the active set updating,
**characterized in that** the method further comprises the following steps:
- determining a value describing radio conditions of the network in the area from the measurement report values received from the user equipment UE,
- comparing said value describing the radio conditions of the network in the area with a threshold value set in the network,
- changing the window set values comprising information about the predetermined-conditions to initiate the active set updating in response to said comparison of said value describing the radio conditions of the network in the area with the threshold value.

2. A method according to claim 1, **characterized in that** the method further comprises at least one step of comparing said value describing the radio conditions of the network in the area with at least a second threshold value if the condition in the preceding comparison is not fulfilled.

3. A method according to claim 2, **characterized in that** the method further comprises a step of changing window set values comprising information about the predetermined conditions to initiate the active set updating in response to the comparison of said value describing the radio conditions of the network in the area with the second threshold value.

4. A method according to claims 2 or 3, **characterized in that** the method comprises a step of continuing the use of the same window set if the value describing the radio conditions of the network in the area is between the first and the second threshold values.

5. A method according to any of the preceding claims 1-4, **characterized in that** the method further comprises a step of sending a measurement control message to said user equipment UE comprising information about the new window set values comprising information about predetermined conditions to initiate the active set updating.

6. A method according to any of the preceding claims 1-5. **characterized in that** the method further comprises a step of continuing the handover procedure with said new window set values and updating said active set in response to the result of said handover procedure.

7. A method according to any of the preceding claims 1-6. **characterized in that** the value describing the radio conditions of the network in the area is RSSI value calculated from the measurement report values.

8. A method according to any of the preceding claims 1-6, **characterized in that** the value describing the radio conditions of the network in the area is the average of the all RSCP values belonging to the cells in the active set and received in the measurement report,

9. A method according to claim **1, characterized by** said window set comprises information about an addition window, a drop window and a replacement window.

10. A system for optimizing a handover procedure in a telecommunications network, the system comprising at least
- an user equipment UE for measuring signal strengths of cells in the area and transmitting a measurement report comprising information at least about the signal strengths of cells in the area to the network,
in which system an active set comprising information about the cells relating to the handover is maintained; the active set is updated in response to a comparison of the measured signal strengths of the cells in the area to window set values comprising information about predetermined conditions to initiate the active set updating,
**characterized in that** the system further comprises a network element
- for determining a value describing radio conditions of the network in the area from the measurement report values received from the user equipment UE,
- for comparing said value describing the radio conditions of the network in the area with a threshold value set in the network,
- for changing the window set values comprising information about the predetermined conditions to initiate the active set updating in response to said comparison of said value describing the radio conditions of the network in the area with the threshold value.

11. A system according to claim 10, **characterized in that** the system comprises the network element for comparing said value describing the radio conditions of the network in the area with at least a second threshold value if the condition in the preceding comparison is not fulfilled.

12. A system according to claim 11, **characterized in that** the system comprises the network element for changing window set values comprising information about the predetermined conditions to initiate the active set updating in response to the comparison of said value describing the radio conditions of the network in the area with the second threshold value,

13. A system according to claim 11 or 12, **characterized in that** the system comprises the network element for continuing the use of the same window set if the value describing the radio conditions of the network in the area is between the first and the second threshold values.

14. A system according to any of the preceding claims 10-13, **characterized in that** the system comprises the network element for sending a measurement control message to said user equipment UE comprising information about the new window set values comprising information about predetermined conditions to initiate the active set updating.

15. A system according to any of the preceding claims 10-14. **characterized in that** the system comprises the network element for continuing the handover procedure with said new window set values and updating said active set in response to the result of said handover procedure,

16. A system according to any of the preceding claims 10-15, **characterized in that** in the system the value describing the radio conditions of the network in the area is RSSI value calculated from the measurement report values,

17. A system according to any of the preceding claims 10-15. **characterized in that** in the system the value describing the radio conditions of the network in the area is the average of the all RSCP values belonging to the cells in the active set and received in the measurement report.

18. A system according to claim 10, **characterized in that** in the system the window set comprises information about an addition window, a drop window and a replacement window.

19. A network element for optimizing a handover procedure in a telecommunications network, in which procedure
- an user equipment UE is arranged to measure signal strengths of cells in the area and to transmit a measurement report comprising information at least about the signal strengths of cells in the area to the network,
in which telecommunications network an active set comprising information about the cells relating to the handover is maintained; the active set is updated in response to a comparison of the measured signal strengths of the cells in the area to window set values comprising information about predetermined conditions to initiate the active set updating,
**characterized in that** the network element is arranged to
- determine a value describing radio conditions of the network in the area from the measurement report values received from the user equipment UE,
- compare said value describing the radio conditions of the network in the area with a threshold value set in the network,
- change the window set values comprising information about the predetermined conditions to initiate the active set updating in response to said comparison of said value describing the radio conditions of the network in the area with the threshold value.

20. A network element according to claim 19, **characterized in that** the network element is arranged to compare said value describing the radio conditions of the network in the area with at least a second threshold value if the condition in the preceding comparison is not futfilled,

21. A network element according to claim 20, **characterized in that** the network element is arranged to change window set values comprising information about the predetermined conditions to initiate the active set updating in response to the comparison of said value describing the radio conditions of the network in the area with the second threshold value.

22. A network element according to claim 20 or 21, **characterized in that** the network element is arranged to continue the use of the same window set if the value describing the radio conditions of the network in the area is between the first and the second threshold values.

23. A network element according to any of the preceding claims 19 - 22, **characterized in that** the network element is arranged to send a measurement control message to said user equipment UE comprising information about the new window set values comprising information about predetermined conditions to initiate the active set updating.

24. A network element according to any of the preceding claims 19 - 23, **characterized in that** the network element is arranged to continue the handover procedure with said new window set values and to update said active set in response to the result of said handover procedure.

25. , A network element according to any of the preceding claims 19 - 24, **characterized in that** in the network element the value describing the radio conditions of the network in the area is RSSI value calculated from the measurement report values.

26. A network element according to any of the preceding claims 19 - 24, **characterized in that** in the network element the value describing the radio conditions of the network in the area is the average of the all RSCP values belonging to the cells in the active set and received in the measurement report.

27. A network element according to claim 19, **characterized in that** in the network element the window set comprises information about an addition window, a drop window and a replacement window,

28. A network element according to any of the preceding claims 19 - 27, **characterized in that** the network element is RNC.

29. A network element according to any of the preceding claims 19 - 27, **characterized in that** the network element is Node B.
